Europäisches Patentamt

European Patent Office

Office européen des brevets

(11) Veröffentlichungsnummer: **0 087 111**
**B1**

(19)

(12) EUROPÄISCHE PATENTSCHRIFT

(45) Veröffentlichungstag der Patentschrift :
10.09.86

(51) Int. Cl.⁴ : **A 61 C 13/20**, F 27 B 17/02,
F 27 B 5/04

(21) Anmeldenummer : 83101445.1

(22) Anmeldetag : 16.02.83

(54) Brennofen, insbesondere Vakuumbrennofen für dentalkeramische Zwecke.

(30) Priorität : 18.02.82 DE 3205729

(43) Veröffentlichungstag der Anmeldung :
31.08.83 Patentblatt 83/35

(45) Bekanntmachung des Hinweises auf die Patenterteilung : 10.09.86 Patentblatt 86/37

(84) Benannte Vertragsstaaten :
AT CH DE FR GB LI LU NL SE

(56) Entgegenhaltungen :
DE-A- 2 036 292
DE-A- 2 632 846
DE-C- 343 176
US-A- 3 655 941
US-A- 3 860 738

(73) Patentinhaber : DENTSPLY INTERNATIONAL, INC.
500 West College Avenue
York Pennsylvania 17404 (US)

(72) Erfinder : Meislitzer, Karl-Heinz
Schellingstrasse 10
D-6200 Wiesbaden (DE)
Erfinder : Hauner, Wigbert
Im Birkenwäldchen 59
D-6070 Langen/Hessen (DE)

(74) Vertreter : Wolf, Günter, Dipl.Ing.
Patentanwälte Dipl.-Ing. Amthor Dipl.-Ing. Wolf Postfach 70 02 45 An der Mainbrücke 16
D-6450 Hanau 7 (DE)

## Beschreibung

Die Erfindung betrifft einen Brennofen gemäß Oberbegriff des Patentanspruches 1.

Ein Brennofen der genannten Art ist nach der DE-A-2 036 292 bekannt. Bei diesem vorbekannten Brennofen ist das Ofenoberteil mit zwei Säulen fest verbunden, die in das darunter befindliche Ofengehäuse eintauchen und in diesem geführt sind. Dadurch kann das Ofenoberteil in bezug auf den stationär am Ofengehäuse angeordneten Brenngutträgersockel auf und ab gesenkt werden und zwar entweder nur von Hand oder nur mit einer geeigneten Hubeinrichtung für beide Säulen. Abgesehen davon, daß sich diese Betätigungsarten gegenseitig ausschließen, ist die Zugänglichkeit des Brenngutträgersockels bei gehobenem Ofenoberteil durch die beiden seitlichen Säulen zumindest behindert, was insofern bedeutsam ist, weil an derartigen Öfen sowieso beengte Zugänglichkeitsverhältnisse zum relativ kleinen Brenngutträgersockel herrschen.

Dies gilt auch für Brennöfen dieser Art nach den US-A-3 655 941 und 3 860 738, die sich vom vorbeschrieben Brennofen insofern unterscheiden, als hierbei die Brenngutträgersockel beweglich sind und in bezug auf die nach unten offenen Brennkammern der Ofenoberteile auf und ab gesenkt werden, was sich als nicht vorteilhaft erwiesen hat, da dadurch das Brenngut gegf. umfallen bzw. seine Lage verändern kann. Eine von der Hubmechanik unabhängige Bewegung der Brenngutträgersockel ist dabei nicht möglich, da diese fest mit der Hubmechanik verknüpft sind. Bei einem ferner bekannten Brennofen nach der DE-A-26 32 846 und auch ach den US-A-569 911, 657 202 befinden sich der die Brennkammer bildende Hohlraum im aufklappbaren Oberteil bzw. bei den Öfen nach den US-A im Ober- und Unterteil. Diese Bauweise und die damit gegebene Art des Öffnens und Schließens und die dadurch bewirkte Anhebung und Senkung der Brennkammer bzw. eines Teiles der Brennkammer hat den Nachteil, daß damit eine individuelle gleichmäßige Steuerung der Abkühlung eines Brennobjektes nicht erzielt werden kann. Dies ist zwar mit einem Brennofen nach der OE-A-347 572 und nach der US-A-3 860 738 möglich, bei diesen Brennöfen wird aber der Brenngutträgersockel von unten in das stationäre Oberteil eingefahren. Um den verstellbaren Brenngutträgersockel zwecks Beschickung freistellen zu können, muß bei Öfen dieser Art das ganze Ofenoberteil in ausreichender Distanz auf entsprechend hohen Säulen angeordnet werden, was zu sperrigen und relativ hochbauenden Gebilden führt.

Ausgehend von einem Brennofen der eingangs genannten Art nach der DE-A-2 036 292 liegt der Erfindung die Aufgabe zugrunde, diesen dahingehend zu verbessern, daß unter Beachtung der Maßgabe einer bekannt gezielt und gleichmäßig möglichen Abkühlung des Brennobjektes bei einfacher Bauweise der erforderlichen Hubeinrichtung und bei verbesserter Zugänglichkeit des Brenngutträgersockels die Brennkammer auch unabhängig von der Hubeinrichtung geöffnet und geschlossen werden kann.

Diese Aufgabe ist mit einem Brennofen der eingangs genannten Art nach der Erfindung durch die im Kennzeichen des Patentanspruches 1 angeführten Merkmale gelöst. Vorteilhafte Weiterbildungen ergeben sich nach den Unteransprüchen.

Wesentlich ist also bei dieser erfindungsgemäßen Ausbildung, daß das nur einseitig an einem Stativ geführte Oberteil, wodurch der davon freigestellte Brenngutträgersockel von allen anderen Seiten frei zugänglich wird, einerseits in bezug auf den Brenngutträgersockel gezielt und gesteuert *via* Antriebselemente auf und ab bewegt werden kann, ohne daß dabei andererseits eine feste Verbindung des Oberteiles zu den Antriebselementen besteht, wodurch aber das Oberteil auch ohne weiteres im Bedarfsfall von Hand hochgehoben werden kann.

Der Brennofen und seine vorteilhaften Weiterbildungen werden nachfolgend anhand der zeichnerischen Darstellung eines Ausführungsbeispieles näher erläutert.

Es zeigt schematisch

Figur 1 teilweise in Schnitt und Ansicht den Brennofen von der Seite und

Figur 2 teilweise in Draufsicht und Schnitt den Ofen im Bereich der Linie II-II.

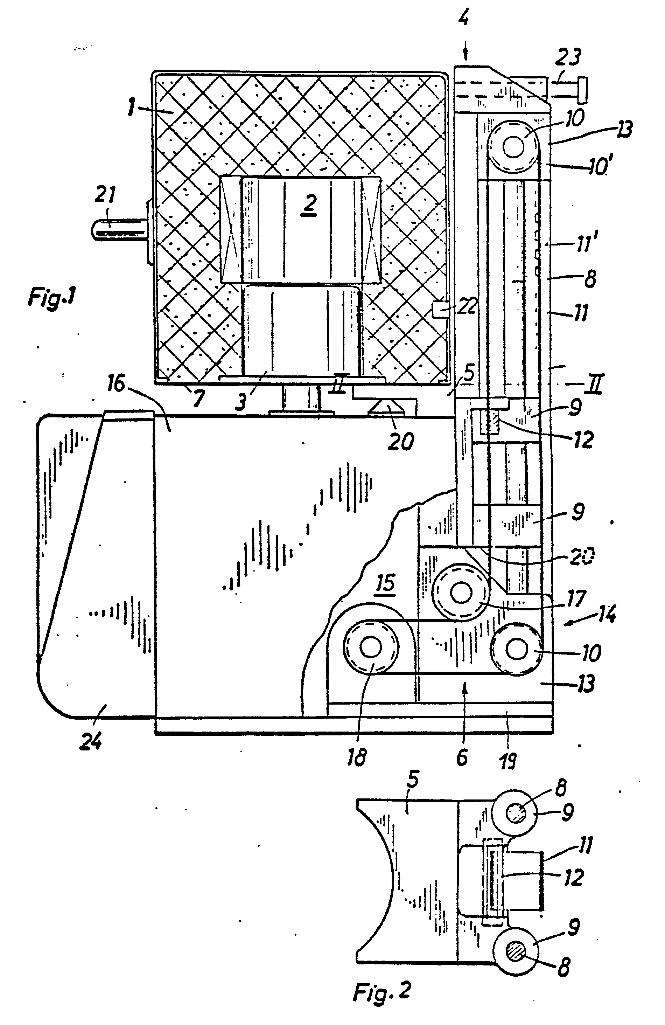

Wie aus Fig. 1 erkennbar, besteht der Brennofen im wesentlichen aus dem unteren Ofengehäuse 16, dem Oberteil 1 mit der nach unten offenen Brennkammer 2 und dem Stativ 4. Fluchtend zur Brennkammer 2 ist unter dieser stationär am Gehäuse 16 der Brenngutträgersockel 3 angeordnet. Die gezeigte Stellung entspricht der Brennphase. Das Oberteil 1 ist, was nicht näher dargestellt ist, verschieblich am Stativ 4 geführt. Die Antriebselemente für den an der unteren Fläche 7 des Oberteiles 1 angreifenden Mitnehmer 5, der mittels Kugelbuchsen 9 an zwei Führungsstangen 8 des Stativs 4 geführt ist, sind insgesamt mit 6 bezeichnet. Im einzelnen bestehen diese beim bevorzugten Ausführungsbeispiel aus zwei Lagerblöcken 13, aus in diesen gelagerten Führungsrollen 10 mit Umfangsverzahnung 10′, einem Führungsband 11 in Form eines Zahnriemens 11′ und aus einem von einer elektronischen Steuerung 24 im Gehäuse 16 aus steuerbarem motorischen Antrieb 18. Der Zahnriemen 11′ ist, wie dargestellt, am unteren Ende 14 über eine ggf. ebenfalls am unteren Lagerblock 13 sitzende Umlenkrolle 17 und die untere Führungsrolle 10 rechtwinklig in das Gehäuse 16 hinein abgewinkelt und läuft dort zum Antrieb 18. An bestimmter Stelle des Zahnriemens 11′ sitzt fest ein Mitnehmeranschlag 12, der in lediglich Wirkverbindung mit dem an den Führungsstangen 8 geführten Mitnehmer 5 für das Oberteil 1 steht. Diesbezüglich wird auf Fig. 2 verwiesen.

Da nur eine kraftschlüssige Wirkverbindung zwischen Mitnehmeranschlag 12 und dem Oberteil 1 besteht, kann dieses auch ohne weiteres von Hand mittels Handgriff 21 hochgeschoben und auch wieder abgesenkt werden. Wenn dabei, wie dargestellt, der Mitnehmer 5 fest mit der unteren Fläche 7 des Oberteils 1 verbunden ist, wobei die Kugelbüchsen 9 des Mitnehmers auch gleichzeitig die Führungslager für das Oberteil 1 bilden, geht dabei der Mitnehmer 5 mit seinen Kugelbuchsen 9 mit nach oben. Von dieser Hubbewegung bleibt aber das Antriebselement 6 mit dem Mitnehmeranschlag 12 unberührt. Sofern nicht der Brenngutträgersockel 3 (für den Fall eines Vakuumbrandes sind Brenngutträgersockel 3 und Ofenoberteil 1 in bekannter Weise selbstverständlich abgedichtet) selbst als unterer Aufsatzanschlag dient, können besondere Endanschläge 20 (dafür kann aber auch die Oberfläche des unteren Lagerblockes 13 dienen), wie angedeutet, vorgesehen sein.

Für die mögliche Handbetätigung des Oberteiles 1, das übrigens zweckmäßig auch selbst an den Führungsstangen 8 geführt sein kann, sind am Stativ 4 und am Oberteil 1 Verrastungselemente 22 und Verrastungsgegenelemente 23 angeordnet, um das Oberteil 1 in Hoch- bzw. Öffnungsstellung bezüglich des Brenngutträgersockels halten zu können. Wenn das Oberteil 1 selbst an den Führungsstangen 8 gelagert ist, muß der Mitnehmer 5 nicht fest mit dem Oberteil 1 verbunden sein, denn wesentlich ist nur, daß eine kraftschlüssige Verbindung zwischen dem Antriebselement 6 und dem Oberteil 1 besteht. Diese nur kraftschlüssige Verbindung ist zwischen Mitnehmeranschlag 12 und Mitnehmer 5 gegeben, die keine feste Verbindung zueinander haben. Besteht keine feste Verbindung zwischen Oberteil 1 und Mitnehmer 5 und ist das Oberteil 1 selbst an den Stangen 8 des Stativs 4 gelagert, so können sämtliche an den Antriebselementen beteiligte Elemente (5, 8, 9, 10, 10', 11, 11', 12, 17, 18) als komplette Einbaueinheit mit einer gemeinsamen und in das Ofengehäuse 16 einschieb und dort fixierbaren Trägerplatte 19 ausgebildet sein.

In Rücksicht auf eine exakte Parallelführung wird das Ofenoberteil 1 aber bevorzugt, ebenfalls, wie erläutert, an den Führungsstangen 8 gelagert.

Beim Absenkvorgang folgt das Oberteil 1, unabhängig davon, ob nun eine feste oder nur kraftschlüssige Verbindung zum Mitnehmer 5 besteht, auf jeden Fall den nach unten gehenden Mitnehmeranschlag 12 bzw. dem Mitnehmer 5.

**Patentansprüche**

1. Brennofen, insbesondere Vakuumbrennofen für dentalkeramische Zwecke, bestehend aus einem stationären Brenngutträgersockel (3) am unteren Ofengehäuse (16) und aus einem in bezug auf den Sockel (3) beweglichen, eine nach unten offene Brennkammer (2) enthaltenden Ofenoberteil (1), das vertikal verstellbar an einem Stativ (4) geführt ist, wobei die nach unten gerichtete Öffnung der Brennkammer (2) mit dem Brenngutträgersockel (3) fluchtet, dadurch gekennzeichnet, daß am Stativ (4) ein zwangsgeführter, die untere Fläche (7) des einseitig am Stativ geführten Oberteiles (1) untergreifender Mitnehmer (5) und ein Antriebselement (6) angeordnet sind und daß das Antriebselement (6) mit einem Mitnehmeranschlag (12) versehen ist und das Antriebselement (6) für den Mitnehmer (5) in Form eines über Führungsrollen (10) geführten, endlosen, mit dem Mitnehmer (5) durch den Mitnehmeranschlag (12) in Wirkverbindung stehenden Führungsbandes (11), wie Zahnriemen (11'), Kettentrieb, Stellzylinder oder Gewindespindel, ausgebildet ist.

2. Brennofen nach Anspruch 1, dadurch gekennzeichnet, daß am Stativ (4) zwei vertikale Führungsstangen (8) und an diesen der Mitnehmer (5) mittels Gleitlagern, wie Kugelbüchsen (9), Gleitlägerbüchsen oder dergl. geführt angeordnet sind.

3. Brennofen nach Anspruch 1 oder 2, dadurch gekennzeichnet, daß die Führungsrollen (10) und die Führungsstange (8) an gemeinsamen, am Stativ (4) angeordneten Lagerblöcken (13) angeordnet sind.

4. Brennofen nach einem der Ansprüche 1 bis 3, dadurch gekennzeichnet, daß das Führungsband (11) am unteren Ende (14) in den Innenraum (15) des Ofengehäuses (16) mittels einer Umlenkrolle (17) abgewinkelt zu einem dort angeordneten motorischen Antrieb (18) geführt ist.

5. Brennofen nach den Ansprüchen 3 und 4, dadurch gekennzeichnet, daß die Umlenkrolle (17) und der motorische Antrieb (18) auf einer Lagerplatte (19) befestigt sind und diese im Ofengehäuse (16) einschieb- und in diesem fixierbar ausgebildet und angeordnet sind.

6. Brennofen nach einem der Ansprüche 1 bis 5, dadurch gekennzeichnet, daß am Ofengehäuse (16) bzw. am Stativ (4) ein unterer Anschlag (20) für den Mitnehmer (5) angeordnet ist.

7. Brennofen nach einem der Ansprüche 1 bis 6, dadurch gekennzeichnet, daß das obere, mit einem Handgriff (21) versehene Ofenteil (1) mit einem Verrastungselement (22) und das Stativ (4) mit einem Verrastungselement (23) versehen ist.

8. Brennofen nach einem der Ansprüche 1 bis 7, dadurch gekennzeichnet, daß die Lagerblöcke (13) mit den Führungsrollen (10, 17), den Führungsstangen (8) zusammen mit dem Mitnehmer (5), dem motorischen Antrieb (18) und der Lagerplatte (19) als in sich geschlossene Montageeinheit ausgebildet und am Gehäuse (16) bzw. dem Stativ (4) angeordnet sind.

**Claims**

1. Furnace, particularly a vacuum furnace for dental ceramic purposes, consisting of a stationary support pedestal (3) for the material to be fired on the lower furnace housing, (16) and an upper furnace section (1) which is movable relative to the pedestal (3) and contains a firing chamber (2) open at the bottom, said upper section being guided in vertically adjustable manner on a stand (4), the downwardly directed opening of the firing chamber (2) being aligned with the support pedestal (3) for the material to be fired, characterised in that on the stand (4) are mounted a positively guided cam (5) engaging below the lower surface (7) of the upper section (1) which is guided at one end on the stand and a drive element (6) and in that the drive element (6) is provided with a cam stop (12) and the drive element (6) for the cam (5) is in the form of an endless guide belt (11), such as a toothed belt (11'), chain drive, operating cylinder or threaded spindle, guided over guide rollers (10) and effectively connected to the cam (5) by the cam stop (12).

2. Furnace as claimed in claim 1, characterised in that two vertical guide rods (8) are mounted on the stand (4) and the cam (5) is mounted on these rods (8) by means of journal bearings such as ball boxes (9), journal bearing boxes or the like.

3. Furnace as claimed in claim 1 or 2, characterised in that the guide rollers (10) and the guide rod (8) are mounted on common bearing blocks (13) mounted on the stand.

4. Furnace as claimed in one of claims 1 to 3, characterised in that the guide belt (11) is guided at the bottom end (14) into the interior (15) of the furnace housing (16) by means of a guide roller (17) which bends it round to a motor drive (18) provided there.

5. Furnace as claimed in claims 3 and 4, characterised in that the guide roller (17) and the motor drive (18) are fixed on a bearing plate (19) and these are constructed and mounted so as to be capable of being inserted into the furnace housing (16) and fixed therein.

6. Furnace as claimed in claims 1 of claims 1 to 5, characterised in that a lower stop (20) for the cam (5) is provided on the furnace housing (16) or on the stand (4).

7. Furnace as claimed in one of claims 1 to 6, characterised in that the upper furnace section (1) fitted with a handle (21) is provided with an engaging element (22) and the stand (4) is provided with an engaging element (23).

8. Furnace as claimed in one of claims 1 to 7, characterised in that the bearing blocks (13) with the guide rollers (10, 17), the guide rods (8) together with the cam (5), the motor drive (18) and the bearing plate (19) are constructed as an intrinsically sealed assembly unit and are mounted on the housing (16) or on the stand (4).

## Revendications

1. Four de cuisson, en particulier four à vide pour des travaux de céramique dentaire, se composant d'un socle fixe (3) formant support des matériaux à cuire, disposé sur le carter inférieur de four (16) et d'une partie supérieure de four (1), mobile par rapport au socle (3) et comportant une chambre de cuisson (2) ouverte vers le bas, cette partie supérieure étant disposée avec possibilité de déplacement vertical sur un support (4), l'ouverture dirigée vers le bas de la chambre de cuisson (2) étant en alignement avec le socle support des matériaux à cuire (3), caractérisé en ce qu'un tenon d'entraînement (5) à guidage forcé, en prise avec la surface inférieure de la partie supérieure (1) guidée d'un côté sur le support et un élément d'entraînement (6) sont disposés sur le support (4) et en ce que l'élément d'entraînement (6) est muni d'une butée d'entraînement (12), et en ce que l'élément d'entraînement (6) pour le tenon d'entraînement (5) est agencé sous forme d'une bande de guidage (11), telle qu'une courroie dentée (11') sans fin, guidée sur des poulies de guidage (10) et se trouvant en liaison de fonctionnement avec le tenon d'entraînement (5) par la butée d'entraînement (12), d'une commande à chaîne, d'un vérin de manœuvre ou d'une tige filetée.

2. Four de cuisson selon la revendication 1, caractérisé en ce que sur le support (4) sont disposées deux tiges de guidage verticales (8), le tenon d'entraînement (5) étant disposé sur celles-ci au moyen de paliers de glissement tels que douilles à billes (9), coussinets à glissement ou similaires.

3. Four de cuisson selon la revendication 1 ou la revendication 2, caractérisé en ce que les poulies de guidage (10) et les tiges de guidage (8) sont disposées sur des blocs d'appui (13) montés conjointement sur le support (4).

4. Four de cuisson selon l'une des revendications 1 à 3, caractérisé en ce qu'à son extrémité inférieure (14) la bande de guidage (11) est déviée dans le volume intérieur (15) du carter de four (16) au moyen d'une poulie de renvoi (17) vers une commande par moteur (18) disposée en cet emplacement.

5. Four de cuisson selon les revendications 3 et 4, caractérisé en ce que la poulie de renvoi (17) et la commande par moteur (18) sont fixées sur une plaque d'appui (19), et sont agencées et disposées pour être engagées dans le carter de four (16) en pouvant être fixées dans celui-ci.

6. Four de cuisson selon l'une des revendications 1 à 5, caractérisé en ce qu'une butée inférieure (20) pour le tenon d'entraînement (5) est disposée sur le carter de four (16) ou sur le support (4).

7. Four de cuisson selon l'une des revendications 1 à 6, caractérisé en ce que la partie supérieure (1) du four, équipée d'une poignée (21), est munie d'un élément d'arrêt (22), le support (4) étant muni d'un élément d'arrêt (23).

8. Four de cuisson selon l'une des revendications 1 à 7, caractérisé en ce que les blocs d'appui (13) sont, avec les poulies de guidage (10, 17), les tiges de guidage (8), conjointement avec le tenon d'entraînement (5), la commande par moteur (18) et la plaque d'appui (19), agencés sous forme d'unité de montage compacte et disposés sur le carter (16) ou sur le support (4).

Fig.1

Fig.2